(19) Europäisches Patentamt
European Patent Office
Office européen des brevets

(11) **EP 4 200 191 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **22744198.7**

(22) Anmeldetag: **14.07.2022**

(51) Internationale Patentklassifikation (IPC):
**B62D 1/04** *(2006.01)* **B62D 1/06** *(2006.01)*

(52) Gemeinsame Patentklassifikation (CPC):
**B62D 1/065; B62D 1/046**

(86) Internationale Anmeldenummer:
**PCT/EP2022/069762**

(87) Internationale Veröffentlichungsnummer:
**WO 2023/030738 (09.03.2023 Gazette 2023/10)**

(54) **VERFAHREN ZUR STEUERUNG EINER BEHEIZUNG EINER LENKHANDHABE SOWIE BERÜHRUNGSERKENNUNG AN DER LENKHANDHABE UND LENKHANDHABE MIT HEIZUNG UND BERÜHRUNGSERKENNUNG**

METHOD FOR CONTROLLING A HEATER OF A STEERING HANDLE AND TOUCH DETECTION ON THE STEERING HANDLE, AND STEERING HANDLE WITH HEATER AND TOUCH DETECTION

PROCÉDÉ DE COMMANDE D'UN DISPOSITIF DE CHAUFFAGE D'UNE POIGNÉE DE DIRECTION ET DÉTECTION TACTILE SUR LA POIGNÉE DE DIRECTION, ET POIGNÉE DE DIRECTION À DISPOSITIF DE CHAUFFAGE ET DÉTECTION TACTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2021 DE 102021122610**

(43) Veröffentlichungstag der Anmeldung:
**28.06.2023 Patentblatt 2023/26**

(73) Patentinhaber: **Marquardt GmbH**
**78604 Rietheim-Weilheim (DE)**

(72) Erfinder:
• **SCHÄFER, Lisa**
**78609 Tuningen (DE)**

• **LEIBER, Christoph**
**78194 Immendingen (DE)**
• **KAISER, Manuela**
**78589 Dürbheim (DE)**
• **HAGGE, Robert**
**78073 Bad Dürrheim (DE)**

(74) Vertreter: **Staeger & Sperling Partnerschaftsgesellschaft mbB Sonnenstraße 19 80331 München (DE)**

(56) Entgegenhaltungen:
**WO-A1-2018/213344 DE-A1- 102018 222 551 DE-A1- 102019 124 293**

**Beschreibung**

Die Erfindung betrifft ein Verfahren zur Steuerung einer Beheizung einer Lenkhandhabe sowie Berührungserkennung an der Lenkhandhabe.

Aus dem Stand der Technik ist eine Vielzahl von Lenkhandhaben, wie beispielsweise Lenkräder bekannt, in welche eine Heizung oder eine Berührungserkennung oder sowohl eine Heizung als auch eine Berührungserkennung integriert sind. Entsprechend sind auch zugehörige Verfahren zu deren Ansteuerung bekannt.

Dabei stellt die Heizung bzw. die Beheizung der Lenkhandhabe in erster Linie eine Komfortfunktion dar, welche einem Bediener ein angenehm temperiertes Bedienelement bereitstellen soll.

Davon abweichend dient die Berührungserkennung überwiegend zur Steigerung der Fahrsicherheit, da durch die Berührungserkennung sichergestellt werden soll, dass der Fahrer die Handhabe mit zumindest einer Hand greift. Zusätzlich kann die Information über die Berührung bzw. Anwesenheit von Fahrer und/oder Hand auch bei zahlreichen weiteren System des Fahrzeugs verwendet werden.

Eine solche Berührungserkennung ist insbesondere vor dem Hintergrund automatisierten Fahrens bzw. autonom fahrender Fahrzeuge relevant, bei welchem der Fahrer das Steuer bzw. Lenkrad aus Sicherheitsgründen weiterhin greifen soll. Alternativ könnte dem Fahrzeug auch durch eine Berührung gemeldet werden, dass der Fahrer wieder selbst die Kontrolle über das Fahrzeug übernehmen möchte. Um sowohl ein beheiztes Lenkrad bzw. eine beheizte Lenkhandhabe als auch eine Berührungserkennung bereitstellen zu können, ist im Stand der Technik meist vorgesehen, dass ein Lenkrad sowohl mit einer Heizung als auch mit einem davon getrennten bzw. separaten Sensor zur Berührungserkennung ausgestattet ist. Das führt jedoch zu einem bauraum- und kostenintensiven Aufbau.

Weiter ist sowohl aus der Schrift EP 2 028 078 A1 als auch aus der Schrift DE 11 2018 005 213 T5 eine Kombination von Heizung und Berührungserkennung und zugehörige Verfahren bekannt. Gemäß beiden Varianten ist jeweils ein Sensor mit mehreren Sensorleitungen vorgesehen, von welchen eine der Sensorleitungen zugleich als Heizdraht genutzt wird, sodass diese integral miteinander ausgebildet sind.

Dabei ist jedoch problematisch, dass die Verfahren zur Steuerung bzw. die Verfahren zur Steuerung mittels einer Sensor-Steuerschaltung auf die Heizung bzw. auf das Verfahren zur Steuerung mittels der Heiz-Steuerschaltung abgestimmt werden muss, da die Steuerung des Sensors nicht die Heizung und die Steuerung der Heizung nicht den Sensor beeinflussen darf.

Entsprechend ist die Auswertung des Sensors oder eine dafür notwendige Schaltung sowie das zugehörige Verfahren komplex, teuer und anfällig für Fehler.

Weiterer Stand der Technik auf diesem Gebiet ist insbesondere durch die Schriften DE 10 2019 124 293 A1 und WO 2018/213 344 A1 gegeben. Aspekte bei der Steuerung einer Beheizung einer Lenkhandhabe sowie Berührungserkennung an der Lenkhandhabe gehen zudem aus der Schrift DE 10 2018 222551 A1 hervor.

Der Erfindung liegt deshalb die Aufgabe zugrunde, die vorgenannten Nachteile zu überwinden und ein einfaches Verfahren zur Steuerung einer Beheizung einer Lenkhandhabe sowie Berührungserkennung an der Lenkhandhabe und eine Lenkhandhabe mit integrierter Beheizung und Berührungserkennung bereitzustellen, welche sowohl kostengünstig als auch insbesondere bezüglich der Ansteuerung einfach ausgeführt werden kann.

Diese Aufgabe wird durch die Merkmalskombination gemäß Patentanspruch 1 gelöst.

Erfindungsgemäß wird daher ein Verfahren zur Steuerung einer Beheizung einer Lenkhandhabe sowie Berührungserkennung an der Lenkhandhabe vorgeschlagen. Die Lenkhandhabe weist zumindest einen elektrisch leitfähigen Funktionsleiter als Heizdraht zur Beheizung der Lenkhandhabe auf, welcher ein Sensorelement eines Sensors zur Berührungserkennung der Lenkhandhabe ist. Ferner weist die Lenkhandhabe eine elektrisch mit zumindest einem Funktionsleiter verbundene Steuervorrichtung auf, die eine Heiz-Steuerschaltung zur Beheizung der Lenkhandhabe über den Funktionsleiter sowie eine Sensor-Steuerschaltung zur Berührungserkennung der Lenkhandhabe über den Funktionsleiter aufweist.

Verfahrensgemäß ist vorgesehen, dass

- der zumindest eine Funktionsleiter elektrisch mit der Heiz-Steuerschaltung verbunden und zugleich oder zuvor von der Sensor-Steuerschaltung getrennt wird;
- der zumindest eine mit der Heiz-Steuerschaltung elektrisch verbundene Funktionsleiter von der Heiz-Steuerschaltung die Lenkhandhabe beheizend angesteuert wird;
- der zumindest eine Funktionsleiter elektrisch mit der Sensor-Steuerschaltung verbunden und zugleich oder zuvor von der Heiz-Steuerschaltung getrennt wird;
- der zumindest eine mit der Sensor-Steuerschaltung elektrisch verbundene Funktionsleiter von der Sensor-Steuerschaltung eine Berührung der Lenkhandhabe erfassend angesteuert wird.

Eine vorteilhafte Weiterbildung des Verfahren sieht zudem vor, dass nach oder vor dem Verbinden des zumindest einen Funktionsleiters mit der Sensor-Steuerschaltung beispielsweise von einer übergeordneten Steuerung oder einer Bedienschnittstelle abgefragt wird, ob eine Berührungserkennung durch eine Ansteuerung des zumindest einen Funktionsleiters, durch welche eine Berührung der Lenkhandhabe erfassbar ist, mittels der Sensor-Steuerschaltung durchzuführen ist.

Weiter kann vorteilhaft vorgesehen sein, dass bei einer eine Berührung der Lenkhandhabe erfassenden Ansteuerung des zumindest einen Funktionsleiters durch die Sensor-Steuerschaltung eine Konfiguration des zumindest einen Funktionsleiters und der Sensor-Steuerschaltung als Ist-Wert erfasst und mit einem Soll-Wert verglichen wird. Der Soll-Wert kann beispielsweise in einer Speichereinheit der Steuervorrichtung hinterlegt sein. Der Ist-Wert kann beispielsweise ein ohmscher Widerstand oder eine Temperatur des zumindest einen Funktionsleiters sein.

Erfindungsgemäß ist vorgesehen, dass bei der eine Berührung der Lenkhandhabe erfassenden Ansteuerung des zumindest einen Funktionsleiters durch die Sensor-Steuerschaltung eine durch den zumindest einen Funktionsleiter erfasste Änderung eines kapazitiven Feldes von der Sensor-Steuerschaltung ausgewertet wird und, dass bei der eine Berührung der Lenkhandhabe erfassenden Ansteuerung des zumindest einen Funktionsleiters durch die Sensor-Steuerschaltung eine Änderung einer Impedanz zumindest eines Funktionsleiters von der Sensor-Steuerschaltung erfasst und ausgewertet wird.

Eine ebenfalls vorteilhafte Weiterbildung des Verfahren sieht vor, dass bei dem Verbinden des zumindest einen Funktionsleiters mit der Sensor-Steuerschaltung mehrere Funktionsleiter mit der Sensor-Steuerschaltung verbunden werden, sodass die Funktionsleiter mit der Sensor-Steuerschaltung mehrere Sensoren bilden. Alternativ oder zusätzlich können zudem mehrere Sensor-Steuerschaltungen vorgesehen sein und bei dem Verbinden des zumindest einen Funktionsleiters mit der Sensor-Steuerschaltung ein Funktionsleiter oder mehrere Funktionsleiter mit jeder Sensor-Steuerschaltung verbunden werden, sodass die Funktionsleiter mit den Sensor-Steuerschaltungen mehrere Sensoren bilden.

Sind mehrere Sensoren vorhanden, ist weiter vorzugsweise vorgesehen, dass bei einer eine Berührung der Lenkhandhabe erfassenden Ansteuerung des zumindest einen Funktionsleiters jeder Sensor abgefragt wird, ob eine Berührung der Lenkhandhabe erfasst wurde. Weiter kann auch geprüft werden, ob jeder Sensor abgefragt wurde.

Erfindungsgemäß wird bei der Erfassung der Änderung einer Impedanz zumindest eines Funktionsleiters zudem plausibilisiert, ob es sich dabei um eine Berührung der Lenkhandhabe handelt. Bei der Erfassung der Änderung des kapazitiven Feldes zumindest eines Funktionsleiters wird zudem zusätzlich plausibilisiert, ob es sich dabei um eine Berührung der Lenkhandhabe handelt. Eine Plausibilisierung kann beispielsweise dadurch durchgeführt werden, dass die kapazitive Änderung bzw. die Änderung der Impedanz einem vorbestimmten Verlauf folgen muss, welcher in der Steuervorrichtung hinterlegt sein kann. Auch Minimal- und Maximalwerte für die Änderung des kapazitiven Feldes bzw. der Impedanz können zur Plausibilisierung verwendet werden.

Zudem kann eine weitere vorteilhafte Variante des Verfahrens vorsehen, dass nach oder vor dem Verbinden des zumindest einen Funktionsleiters mit der Heiz-Steuerschaltung abgefragt wird, ob eine die Lenkhandhabe beheizende Ansteuerung des zumindest einen Funktionsleiters durch die Heiz-Steuerschaltung durchzuführen ist. Auch diese Abfrage kann beispielsweise über eine übergeordnete Steuerung erfolgen, mit welcher die Steuervorrichtung signaltechnisch verbunden ist. Alternativ kann ebenso eine Bedienschnittstelle abgefragt werden.

Weiter kann vorgesehen sein, dass bei einer die Lenkhandhabe beheizenden Ansteuerung des zumindest einen Funktionsleiters durch die Heiz-Steuerschaltung ein Soll-Wert für die Temperatur der Lenkhandhabe abgefragt wird und/oder ein Ist-Wert der Temperatur der Lenkhandhabe erfasst und mit dem Soll-Wert verglichen wird.

Ein weiterer, jedoch nicht zu der Erfindung gehörender Aspekt betrifft eine Lenkhandhabe mit Beheizung und Berührungserkennung für ein Fahrzeug. Bei der Lenkhandhabe kann es sich sowohl um ein Lenkrad als auch beispielsweise um eine Lenkstange, einen Steuerknüppel oder ein Steuerhorn handeln. Die Lenkhandhabe weist ein Kernelement auf, bei welchem es sich beispielsweise um den Kern eines eine Lenkachse umlaufenden Lenkkranzes eines Lenkrades handeln kann. Weiter kann es sich bei dem Kernelement insbesondere um einen Kern in einem Bereich der Lenkhandhabe handeln, an welchem die Lenkhandhabe bestimmungsgemäß von einem Bediener gegriffen werden kann. Neben dem Kernelement weist die Lenkhandhabe eine Steuervorrichtung und zumindest eine auf dem Kernelement und insbesondere auf der Oberfläche des Kernelements angeordnete Funktionsschicht auf. Die Funktionsschicht weist zumindest einen in der Funktionsschicht verlaufenden elektrisch leitfähigen Funktionsleiter als Heizdraht zur Beheizung der Lenkhandhabe auf, welcher zugleich ein Sensorelement bzw. eine Sensorleitung oder Sensorelektrode eines Sensors zur Berührungserkennung der Lenkhandhabe ist. Zur Ansteuerung bzw. Bestromung des Funktionsleiters ist die Steuervorrichtung elektrisch mit zumindest einem der Funktionsleiter verbunden und weist eine Heiz-Steuerschaltung zur Beheizung der Lenkhandhabe über den Funktionsleiter sowie eine Sensor-Steuerschaltung zur Berührungserkennung der Lenkhandhabe über den Funktionsleiter auf. Vorzugsweise bilden dabei die Sensor-Steuerschaltung und der Funktionsleiter gemeinsam den Sensor und weiter insbesondere einen kapazitiven Sensor und/oder einen Sensor zur Erfassung einer insbesondere durch Berührung verursachten Änderung einer Impedanz des Funktionsleiters. Zudem ist vorzugsweise keine weitere Sensorleitung vorgesehen, sodass also der Sensor ausgebildet ist, eine Berührung der Lenkhandhabe allein aus einer Annäherung eines Körpers (z.B. Hand oder Knie eines Bedieners bzw. Fahrers) an den als Sensorelektrode wirkenden Funktionsleiter zu erkennen. Besonders vorteilhaft ist vorgesehen, dass die Steuervorrichtung ausgebildet ist, den Funktionsleiter wechselweise mit der Heiz-Steuerschaltung die Lenkhandhabe beheizend und mit der Sensor-Steuerschaltung eine Berührung der Lenkhandhabe erkennend anzusteuern. Durch die wechselweise Ansteuerung ist es nicht notwendig, die beiden Steuerschaltungen exakt aufeinander abzustimmen, da der Funktionsleiter nicht gleichzeitig, sondern ausschließlich sequentiell, also nacheinander als Heizdraht und als Sensorelement fungiert. Dennoch können die Sensor-Steuerschaltung und die Heiz-Steuerschaltung zur Reduzierung der Signal to noise ratio aufeinander abgestimmt werden. Eine wechselweise Ansteuerung kann zudem auch eine Mittelstellung bzw. einen neutralen Zustand umfassen, in welchem der Funktionsleiter weder mit der Heiz-Steuerschaltung noch mit der Sensor-Steuerschaltung verbunden ist.

Zur Kontaktierung des Funktionsleiters mit der Steuervorrichtung ist vorzugsweise vorgesehen, dass der Funktionsleiter ein erstes Ende und ein entlang der Längsrichtung des Funktionsleiters gegenüberliegendes zweites Ende aufweist, welche jeweils elektrisch mit der Steuervorrichtung kontaktiert sind.

Um sowohl eine möglichst vollständige Beheizung der Lenkhandhabe als auch eine möglichst vollständige Berührungserkennung über den gesamten bestimmungsgemäß greifbaren Bereich der Lenkhandhabe zu ermöglichen, ist vorzugsweise vorgesehen, dass der Funktionsleiter gemäß einem vorbestimmten Muster in der im Wesentlichen gesamten Funktionsschicht verläuft.

Sind mehrere Funktionsleiter vorgesehen, kann für jeden Funktionsleiter eine Steuervorrichtung vorgesehen sein. Weiter kann für mehrere Funktionsleiter eine gemeinsame Steuervorrichtung vorgesehen sein, welche für jeden Funktionsleiter jeweils eine Heiz-Steuerschaltung und jeweils eine Sensor-Steuerschaltung aufweist. Darüber hinaus kann für mehrere Funktionsleiter eine gemeinsame Steuervorrichtung vorgesehen sein, welche eine Heiz-Steuerschaltung und eine Sensor-Steuerschaltung für jeweils mehrere Funktionsleiter aufweist.

Weiter ist hierbei eine Weiterbildung vorteilhaft, bei welcher die Funktionsschicht das Kernelement in Umfangsrichtung vollständig umgibt. Dabei ist als Umfangsrichtung die Umfangsrichtung um eine Haupterstreckungsachse bzw. Haupterstreckungskurve der Lenkhandhabe insbesondere in dem bestimmungsgemäß greifbaren Bereich der Lenkhandhabe zu verstehen.

Zudem kann die Funktionsschicht eine Mantelfläche des Kernelements im Wesentlichen vollständig abdeckend auf dem Kernelement angeordnet werden oder allgemein die Mantelfläche des Kernelements im Wesentlichen vollständig abdecken. Bereiche zum Anschluss des Kernelements an weitere Elemente der Lenkhandhabe, wie beispielsweise das Kernelement mit der Lenkachse verbindende Streben, können frei von der Funktionsschicht bleiben. Hierfür kann die Funktionsschicht und insbesondere eine später erläuterte Trägerschicht flexibel und/oder elastisch ausgebildet sein, sodass sich die Form der Funktionsschicht der Form des Kernelements anpassen kann. Weiter kann eine Form der Funktionsschicht vorzugsweise eine Abwicklung der Mantelfläche des Kernelements sein, wobei wiederum Ausnehmungen oder Aussparungen vorgesehen sein können, in welchen Anschlusselemente, wie zu einem Zentralelement führende Streben vorgesehen sein können.

Dabei kann die Funktionsschicht unmittelbar auf dem Kernelement angeordnet sein, wobei zwischen dem Kernelement und der Funktionsschicht auch weitere Schichten, wie beispielsweise eine weiche, die Haptik der Lenkhandhabe verbessernde Schicht angeordnet sein können.

Um eine gleichmäßige Anordnung des Funktionsleiters über die im Wesentliche gesamte Funktionsschicht zu gewährleisten, ist weiter vorzugsweise vorgesehen, dass der zumindest eine Funktionsleiter gleichmäßig in der Funktionsschicht angeordnet ist und insbesondere einem vorbestimmten Verlauf folgend und weiter insbesondere mäanderförmig in bzw. an der Funktionsschicht angeordnet ist. Vorzugsweise ist der Funktionsleiter bzw. sind die Funktionsleiter dabei in eine Vielzahl von Abschnitte unterteilt, zwischen welchen jeweils eine Umlenkung des Funktionsleiters vorliegt, wobei der Abstand unmittelbar zueinander benachbarter Abschnitte des Funktionsleiters gleichbleibend und die Abstände gleich sind.

Ist nicht nur lediglich ein Funktionsleiter sondern eine Vielzahl von Funktionsleitern vorgesehen, sind vorzugsweise auch die Abstände zwischen den Abschnitten verschiedener Funktionsleiter gleichbleibend und gleich.

Um sowohl eine gezielte Beheizung unterschiedlicher Zonen der Lenkhandhabe als auch eine zonenabhängige Berührungserkennung zu ermöglichen, ist gemäß einer weiteren vorteilhaften Variante vorgesehen, dass die Funktionsschicht, insbesondere entsprechend einer Oberfläche des Kernelements und weiter insbesondere die Funktionsschicht in einem bestimmungsgemäß greifbaren Bereich der Lenkhandhabe in zumindest zwei Zonen unterteilt ist und je Zone jeweils ein die jeweilige Zone insbesondere vollständig abdeckender Funktionsleiter vorgesehen ist. Dabei können die Zonen entlang der Haupterstreckung (Haupterstreckungsachse bzw. Haupterstreckungskurve) des Kernelements bzw. des bestimmungsgemäß greifbaren Bereichs der Lenkhandhabe nebeneinander und/oder aufeinanderfolgend angeordnet sein. Sind die Zonen sowohl nebeneinander als auch aufeinanderfolgend angeordnet, ergibt sich daraus eine raster- bzw. matrixartige Anordnung der Zonen.

Die Zonen können quer zu der Haupterstreckungsachse bzw. -kurve der Funktionsschicht, welche der Haupterstreckungsachse bzw. -kurve der Lenkhandhabe entsprechen kann, und/oder entlang dieser benachbart bzw. alternierend angeordnet sein, sodass zwischen Berührungen entlang der Haupterstreckungsachse bzw. -kurve der Lenkhandhabe und/oder Berührungen an einer Vorder- und/oder Rückseite der Lenkhandhabe unterschieden werden kann. Dabei können in einem die Vorderseite der Lenkhandhabe bestimmenden Bereich der Funktionsschicht mehr Zonen vorgesehen sein, als an einem die Rückseite der Lenkhandhabe bestimmenden Bereich der Funktionsschicht.

Weiter können die Zonen auch ineinander verschachtelt bzw. einander umgebend angeordnet sein. Beispielsweise kann eine erste innen liegende Zone von einer zweiten außen liegenden Zone rahmenförmig umgeben sein, wobei sich die beiden Zonen in Quer- und/oder Längsrichtung als Einheit bzw. gemeinsam über die gesamte Ausdehnung der Funktionsschicht erstrecken können.

Weiter ist vorzugsweise vorgesehen, dass die Funktionsschicht eine flexible Trägerschicht aufweist, welche auch als Trägermatte bezeichnet bzw. ausgebildet sein kann. Der zumindest eine Funktionsleiter ist auf der Trägerschicht angeordnet. Alternativ oder zusätzlich ist der zumindest eine Funktionsleiter in die Trägerschicht eingebettet. Weiter kann die Funktionsschicht auch zwei Trägerschichten bzw. Trägermatten aufweisen, zwischen welchen der zumindest eine Funktionsleiter angeordnet bzw. eingebettet ist. Mit der Trägerschicht ist die Funktionsschicht in einfacher Weise auf dem Kernelement oder einem das Kernelement umgebenden Material anordenbar. Entsprechend kann der Funktionsleiter zunächst auf einer eben ausgelegten Trägerschicht angeordnet und fixiert und anschließend mit der Trägerschicht auf dem Kernelement angeordnet werden, wobei hierbei die Trägerschicht meist mit dem darauf angeordneten Funktionsleiter gekrümmt wird bzw. eine zu dem Kernelement korrespondierende gekrümmte Form annimmt.

Vorteilhaft kann zudem vorgesehen sein, dass die Steuervorrichtung ein Schaltelement aufweist, welches ausgebildet ist, den Funktionsleiter wechselweise elektrisch mit der Heiz-Steuerschaltung und der Sensor-Steuerschaltung zu verbinden. Entsprechend ist der Funktionsleiter niemals zugleich elektrisch mit der Heiz-Steuerschaltung und der Sensor-Steuerschaltung verbunden, sodass der Funktionsleiter niemals zeitgleich sowohl von der Heiz-Steuerschaltung und der Sensor-Steuerschaltung bestromt bzw. angesteuert werden kann.

Ferner kann das Schaltelement auch eine Mittelstellung aufweisen, in welcher der zumindest eine Funktionsleiter weder mit der Heiz-Steuerschaltung noch mit der Sensor-Steuerschaltung verbunden ist.

Neben einem physisch vorhandenen Schaltelement in der Steuervorrichtung kann alternativ oder aus Sicherheitsgründen auch zusätzlich vorgesehen sein, dass durch eine Programmierung der Heiz-Steuerschaltung sowie der Sensor-Steuerschaltung und/oder Schaltelemente in der Heiz-Steuerschaltung sowie der Sensor-Steuerschaltung eine gegenseitige Verriegelung erreicht wird, wodurch ein Funktionsleiter nicht gleichzeitig sondern ausschließlich wechselweise die Lenkhandhabe beheizend und eine Berührung der Lenkhandhabe detektierend ansteuerbar ist.

Weiter kann der Funktionsleiter ein Einzeldraht oder aus einer Vielzahl von Einzeldrähten bzw. Litzen gebildet sein.

Ist der Funktionsleiter aus einer Vielzahl von Einzeldrähten gebildet, können die Einzeldrähte zumindest abschnittsweise voneinander separiert bzw. beabstandet oder aufgefächert verlaufend angeordnet sein. Dabei können auch mehrere Abschnitte vorgesehen sein, über welche die Einzeldrähte separiert verlaufen, wobei dazwischen jeweils Abschnitte vorgesehen sind, in welchen die Einzeldrähte als Bündel bzw. gebündelt verlaufen.

Obgleich die Heiz-Steuerschaltung und die Sensor-Steuerschaltung nicht aufeinander abgestimmt sein müssen, ist es vorteilhaft den Funktionsleiter derart auszubilden, dass sowohl eine ausreichend hohe Heizleistung als auch eine ausreichend hohe Sensorleistung bzw. Sensorempfindlichkeit erreicht werden kann. Entsprechend ist vorzugweise vorgesehen, dass ein ohmscher Widerstand des zumindest einen Funktionsleiters und bei mehreren Funktionsleitern jeweils abhängig von einer Länge des Funktionsleiters und/oder einem Verlauf des Funktionsleiters in der Funktionsschicht derart gewählt ist, dass mit dem jeweiligen Funktionsleiter sowohl eine vorbestimmte Heizleistung als auch eine vorbestimmte Sensorempfindlichkeit erreichbar ist.

Anders ausgedrückt, werden insbesondere der vorbestimmte Verlauf des Funktionsleiters als auch die Materialeigenschaften und insbesondere der ohmsche Widerstand des Funktionsleiters so gewählt, dass sowohl eine gewünschte Heizleistung als auch eine gewünschte Sensorleistung bzw. Sensorempfindlichkeit erreicht werden können.

Zum Erreichen einer gewünschten bzw. vorbestimmten Heizleistung beträgt ein Gesamtwiderstand (ohmscher Widerstand) eines Funktionsleiters vorzugsweise zwischen 0,5 und 5 Ohm.

In einem solchen Bereich des Gesamtwiderstands ist weiter vorzugsweise vorgesehen, dass ein Verhältnis einer Gesamtlänge l des Funktionsleiters zu einem Querschnitt des Funktionsleiters im Bereich von 30 bis 300 m/mm² liegt. Für eine Ausführung des Funktionsleiters als ein Einzeldraht mit einer Querschnittsfläche $A_1$ und eine Ausführung des Funktionsleiters als mehrere Einzeldrähte der Anzahl n und einer jeweiligen Querschnittsfläche $A_2$ gilt entsprechend:

$$\frac{l}{A_1} = \frac{l}{n * A_2} = 30 \dots 300 \frac{m}{mm^2}$$

Wird die Lenkhandhabe als Lenkrad mit einem Lenkraddurchmesser $d_L$ ausgeführt, ist weiter vorzugsweise vorgesehen, dass für eine Gesamtlänge l als Summe aller Längen aller Funktionsleitungen gilt:

$$l \geq 50 * d_L$$

Ausgehend von einem aus einem einzelnen Einzeldraht gebildeten Funktionsleiter mit einer Querschnittsfläche $A_1$ des Einzeldrahtes oder einer aus mehreren Einzeldrähten der Anzahl n gebildeten Funktionsleiter mit einer Querschnittsfläche $A_2$ der Einzeldrähte gilt bezüglich dem Verhältnis zu dem Lenkraddurchmesser $d_L$ vorzugsweise:

$$A_1 = n * A_2 \geq 0{,}66 \ldots 1{,}66 * d_L$$

Wird der Funktionsleiter wie zuvor beschrieben beispielsweise mäanderartig oder aber auch gemäß einem anderen vorbestimmten Muster angeordnet, kann es sich ergeben, dass Abschnitte des Funktionsleiters oder aber auch Abschnitte verschiedener Funktionsleiter benachbart zueinander Verlaufen. Um zu gewährleisten, dass jede bestimmungsgemäße Berührung erfasst wird, ist gemäß einer vorteilhaften Variante vorgesehen, dass ein Abstand zwischen zwei zueinander benachbarten und parallel verlaufenden Abschnitten des zumindest einen Funktionsleiters oder verschiedener Funktionsleiter kleiner oder gleich einem vorbestimmten minimalen Berührabstand ist, welcher insbesondere 10 mm ist. Dabei entspricht der Berührabstand der kleinsten zu detektierenden Berührung, wobei diese entsprechend der ungefähren Breite eines kleinen Fingers 10 mm betragen kann. Dadurch können entsprechend bereits geringfügige Berührungen der Lenkhandhabe, wie beispielsweise durch lediglich einen Finger, erfasst werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1  eine Lenkhandhabe;

Fig. 2  eine erste Variante einer Funktionsschicht;

Fig. 3  eine zweite Variante einer Funktionsschicht;

Fig. 4  eine dritte Variante einer Funktionsschicht;

Fig. 5  eine vierte Variante einer Funktionsschicht;

Fig. 6  eine fünfte Variante einer Funktionsschicht;

Fig. 7  einen Abschnitt eines Funktionsleiters;

Fig. 8  Verfahrensablauf zur Ansteuerung einer Lenkhandhabe.

Die Figuren sind beispielhaft schematisch. Gleiche Bezugszeichen in den Figuren weisen auf gleiche funktionale und/oder strukturelle Merkmale hin.

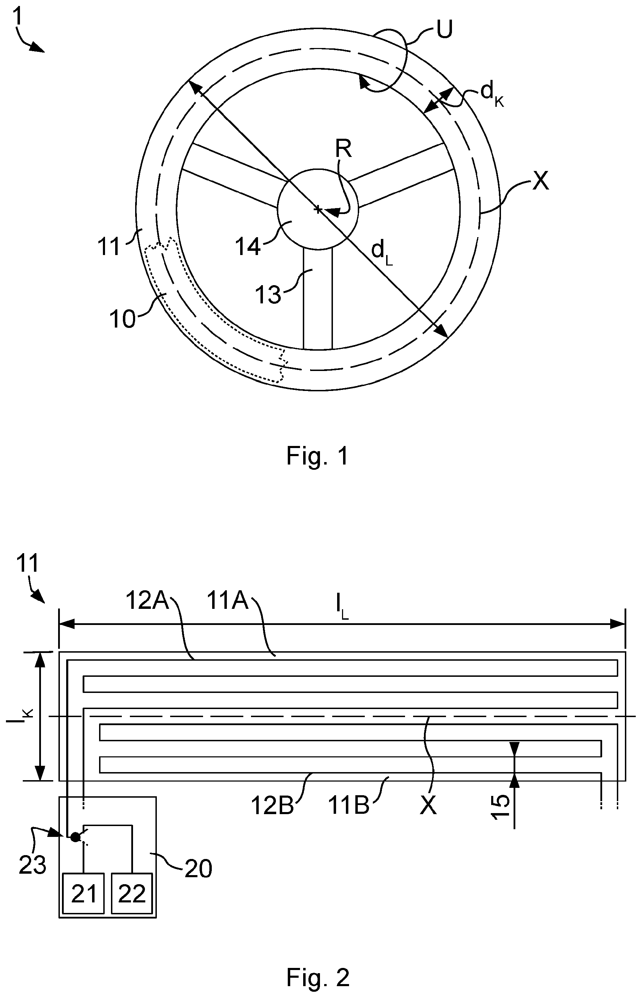

In Figur 1 ist eine schematische Lenkhandhabe 1 und genauer ein Lenkrad als Lenkhandhabe 1 dargestellt, welches im Wesentlichen durch einen Lenkkranz als Kernelement 10, ein Zentralelement 14 und drei das Zentralelement 14 mit dem Kernelement 10 verbindende Streben 13 gebildet ist. Das Kernelement 10 ist zur Lenkung des Fahrzeugs um die Rotationsachse R als Lenkachse drehbar und ist vorliegend rund bzw. als Torus ausgebildet, wobei die Form des Kernelements 10 nicht auf eine torusförmige Ausbildung beschränkt ist. Vielmehr kann die Haupterstreckungsachse X bzw. hier die Haupterstreckungskurve X des Kernelements 10 nahezu jedem vorbestimmten Verlauf folgen, sodass das Kernelement 10 beispielsweise auch oval, zylindrisch oder mehreckig sein kann.

Gemäß der dargestellten Ausführungsform der Lenkhandhabe 1 ist auf dem Kernelement 10 eine die Oberfläche bzw. Mantelfläche des Kernelements, mit Ausnahme der Anschlussstellen für die Streben 13 und optional vorhandenen weiteren Elementen, wie Schaltern, Anzeige- oder Designelementen, vollständig abdeckende Funktionsschicht 11 vorgesehen, welche die Haupterstreckungskurve X, welche selbst die Rotationsachse R umläuft, in Umfangsrichtung U umgibt.

In den Figuren 2 bis 6 sind verschiedene Varianten von Funktionsschichten 11 dargestellt, welche sich im Wesentlichen nur durch die Anzahl ihrer Zonen 11A, 11B, 11C, 11D und entsprechend durch die Anzahl der in den Funktionsschichten 11 angeordneten bzw. vorhandenen Funktionsleiter 12A, 12B, 12C, 12D unterscheiden. Weiter sind die Funktionsschicht 11 jeweils vereinfacht dargestellt, sodass die Abbildung der Funktionsschichten 11 nicht einer Abwicklung einer Mantelfläche eines Torus gemäß dem Kernelement 10 entspricht und die Anschlussbereiche der Streben 13 nicht berücksichtigt.

Aus einem in Figur 1 angetragenen ersten Durchmesser $d_K$ des Torus bzw. des Kernelements 10 sowie einem zweiten Durchmesser $d_L$ des Torus bzw. des Kernelements 10 ergeben sich die Länge $l_K$ in Umfangsrichtung U und die Länge $l_L$ entlang der als Kreislinie ausgebildeten Haupterstreckungskurve X sowie die Fläche A der Mantelfläche des Torus bzw. des Kernelements 10 sowie die Fläche A der Funktionsschicht 11 wie folgt:

$$l_K = \pi d_K$$

$$l_L = \pi d_L$$

$$A = \pi d_K * \pi d_L$$

Wie gemäß der Variante der Funktionsschicht 11 in Figur 2 gezeigt, weist eine mit dieser Funktionsschicht 11 ausgestatte Lenkhandhabe 1 zwei in der Funktionsschicht 11 verlaufende und jeweils mäanderförmig angeordnete elektrisch leitfähige Funktionsleiter 12A, 12B auf. Dabei sind auf der Funktionsschicht zwei Zonen 11A und 11B vorgesehen, welche entlang der Abwicklung der Haupterstreckungsachse X aneinander angrenzen und somit in Umfangsrichtung U zueinander benachbart sind. Je Zone 11A, 11B ist jeweils ein Funktionsleiter 12A, 12B vorgesehen, wobei die Funktionsleiter 12A, 12B auch insbesondere für die Kontaktierung der Funktionsleiter 12A, 12B durch die jeweils andere Zone 11A, 11B verlaufen können, wie es vorliegend für den ersten Funktionsleiter 12A der ersten Zone 11A gezeigt ist.

Die Funktionsleiter 12A, 12B sind jeweils elektrisch mit einer Steuervorrichtung 20 kontaktiert, wobei lediglich die Steuervorrichtung 20 des ersten Funktionsleiters 12A dargestellt ist. Die Steuervorrichtungen 20 weisen jeweils eine Heiz-Steuerschaltung 21 und eine Sensor-Steuerschaltung 22 sowie ein Schaltelement 23 auf, welches ausgebildet ist, den jeweiligen Funktionsleiter 12A, 12B wechselweise mit der Heiz-Steuerschaltung 21 und der Sensor-Steuerschaltung 22 zu verbinden, sodass der jeweilige Funktionsleiter 12A, 12B in einer ersten Schaltstellung des Schaltelements 23 als Heizdraht zur Beheizung der Lenkhandhabe 1 wirkt und ansteuerbar ist und in einer zweiten Schaltstellung des Schaltelements 23 als ein Sensorelement und insbesondere als eine Sensorelektrode eines durch den jeweiligen Funktionsleiter 12A, 12B mit der jeweiligen Sensor-Steuerschaltung gebildeten Sensors zur Berührungserkennung der Lenkhandhabe 1 wirkt und ansteuerbar ist.

Das Schaltelement 23 ist vorliegend mit einem Schaltaktor dargestellt, kann aber auch beispielsweise einen Schaltaktor für jeweils ein Leitungsende des jeweiligen Funktionsleiters 12A, 12B aufweisen.

Um sowohl Berührungen mit einer vorbestimmten bzw. gewünschten Sensorsensitivität detektieren zu können als auch das Lenkrad bzw. die Lenkhandhabe 1 wie vorbestimmt bzw. gewünscht beheizen zu können, werden sowohl die Materialeigenschaften bzw. das für die Funktionsleitung 12A, 12B gewählte Material und der Verlauf der Funktionsleiter 12A, 12B derart gewählt, dass beide Vorgaben erfüllt werden können.

Soll beispielsweise eine Berührung in verschiedenen Bereichen bzw. Zonen der Lenkhandhabe 1 unterscheidbar sein, wird die Funktionsschicht 11 in verschiedene bzw. mehrere und gemäß der Variante in Figur 2 in zwei Zonen 11A, 11B unterteilt, sodass eine Berührung in der ersten Zone 11A von einer Berührung in der zweiten Zone 11B unterscheidbar ist. Beispielhaft kann in Figur 2 die Berührung an einer Vorderseite und an einer Rückseite der Lenkhandhabe 1 unterschieden werden.

Um auch bereits geringfügige Berührungen und insbesondere Berührungen durch einen einzelnen Finger detektieren zu können, ist der Abstand 15 zwischen parallel verlaufenden Abschnitten der Funktionsleiter 12A, 12B bzw. eines Funktionsleiters 12A, 12B kleiner oder gleich einem vorbestimmten Berührabstand, welcher beispielhaft 10 mm ist und der ungefähren Breite eines Fingers entspricht.

Beispielhaft wird von einem Lenkrad mit einem ersten Durchmesser $d_K$ von 35 mm und einem zweiten Durchmesser $d_L$ von 350 mm ausgegangen. Zur Unterscheidung der Berührzonen wir die Funktionsschicht 11 gemäß Figur 2 in zwei Zonen 11A, 11B geteilt und jeweils mit einem Funktionsleiter 12A, 12B versehen. Die zwei Zonen 11A, 11B sind entlang der Umfangsrichtung U bzw. orthogonal zu der Haupterstreckungskurve X nebeneinander angeordnet, sodass zwischen einer Berührung an der vom Fahrer abgewandten Rückseite und einer Berührung an der dem Fahrer zugewandten Vorderseite der Lenkhandhabe 1 unterschieden werden kann. Die Funktionsleiter 12A, 12B sind jeweils aus einer 7-adrigen Litze (je Funktionsleiter 12A, 12B sieben Einzeldrähte) aus 0,08 mm$^2$ Kupferdraht gebildet, welche abweichend von der vereinfachten Darstellung der Figur 2 6-mal mäanderförmig über den gesamten Verlauf der Haupterstreckungsachse X verlegt ist, sodass eine sich aus den einzelnen Längen der Funktionsleiter 12A, 12B ergebende Gesamtlänge (aller Funktionsleiter 12A, 12B) ca. 8 m beträgt.

Mit einer solchen Ausgestaltung der Funktionsleiter 12A, 12B ergibt sich ein ohmscher Widerstand von ca. 4 Ohm je Zone 11A, 11B bzw. je Funktionsleiter 12A, 12B.

Solange der jeweilige Funktionsleiter 12A, 12B mit der jeweiligen Heiz-Steuerschaltung 21 kontaktiert ist, kann die Funktionsschicht 11 bzw. die gesamte Lenkhandhabe 1 gleichmäßig und mit einer vorbestimmten Leistung beheizt werden, wobei für die Heiz-Steuerschaltung 21 nicht die Sensorfunktionalität berücksichtigen muss. Durch eine entsprechende Umschaltung des jeweiligen Schaltelements 23 und durch eine damit einhergehende Trennung des jeweiligen Funktionsleiters 12A, 12B von der jeweiligen Heiz-Steuerschaltung 21 sowie der elektrischen Verbindung mit der jeweiligen Sensor-Steuerschaltung 22 bildet der jeweilige Funktionsleiter 12A, 12B gemeinsam mit der jeweiligen Sensor-Steuerschaltung 22 einen Sensor, welcher eine Berührung in der jeweiligen Zone 11A, 11B detektieren kann, ohne dabei eine Ansteuerung durch die Heiz-Steuerschaltung 21 berücksichtigen zu müssen.

Entsprechend können Heiz-Steuerschaltung 21 und Sensor-Steuerschaltung 22 unabhängig voneinander und vergleichsweise einfach aufgebaut sein.

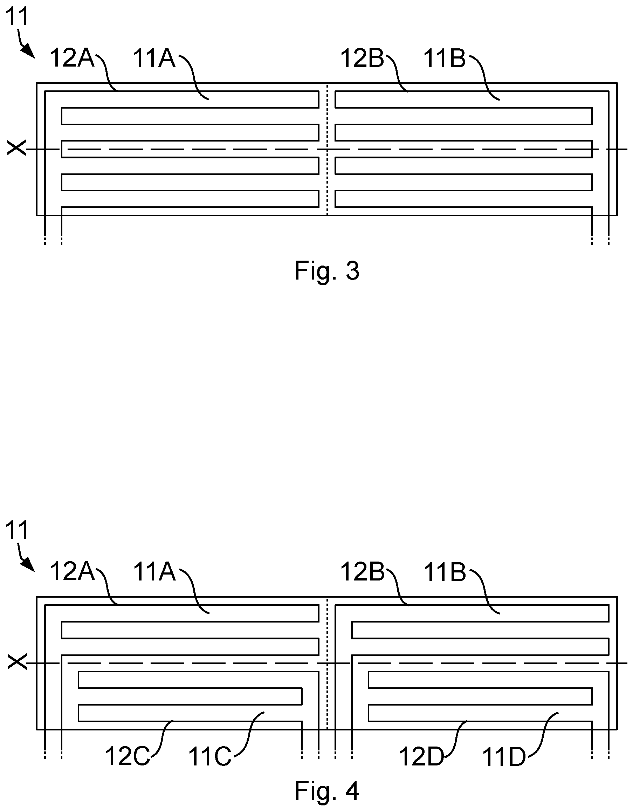

Bei der Funktionsschicht 11 gemäß der Figur 3 sind ebenfalls zwei Zonen 11A, 11B vorgesehen, welche jedoch nicht in Umfangsrichtung U zueinander benachbart angeordnet sind, sondern entlang der Haupterstreckungskurve X aufeinander folgend und somit zueinander benachbart angeordnet sind, wodurch abweichend von der Variante gemäß Figur 2 nicht zwischen einer Berührung an einer Vorderseite und einer Berührung an einer Rückseite der Lenkhandhabe 1 sondern, zwischen Berührungen entlang der Haupterstreckungskurve X unterschieden werden kann. Bezogen auf ein mit der Lenkhandhabe rotierendes System kann somit zwischen einer Berührung der linken Seite der Lenkhandhabe 1 und einer Berührung der rechten Seite der Lenkhandhabe 1 unterschieden werden.

Die Funktionsschicht 11 gemäß Figur 4 weist zudem eine raster- bzw. matrixartige Anordnung von insgesamt vier Zonen 11A, 11B, 11C, 11D mit jeweils einem Funktionsleiter 12A, 12B, 12C, 12D auf, sodass jeweils zwei Zonen (11A zu 11C sowie 11B zu 11D) in Umfangsrichtung U und jeweils zwei Zonen (11A zu 11B sowie 11C zu 11D) entlang der Haupterstreckungskurve X zueinander benachbart sind. Dadurch kann entsprechend zwischen Berührungen an der Vorder- und Rückseite der Lenkhandhabe 1 und zwischen Berührungen entlang der Haupterstreckungskurve X der Lenkhandhabe 1 unterschieden werden.

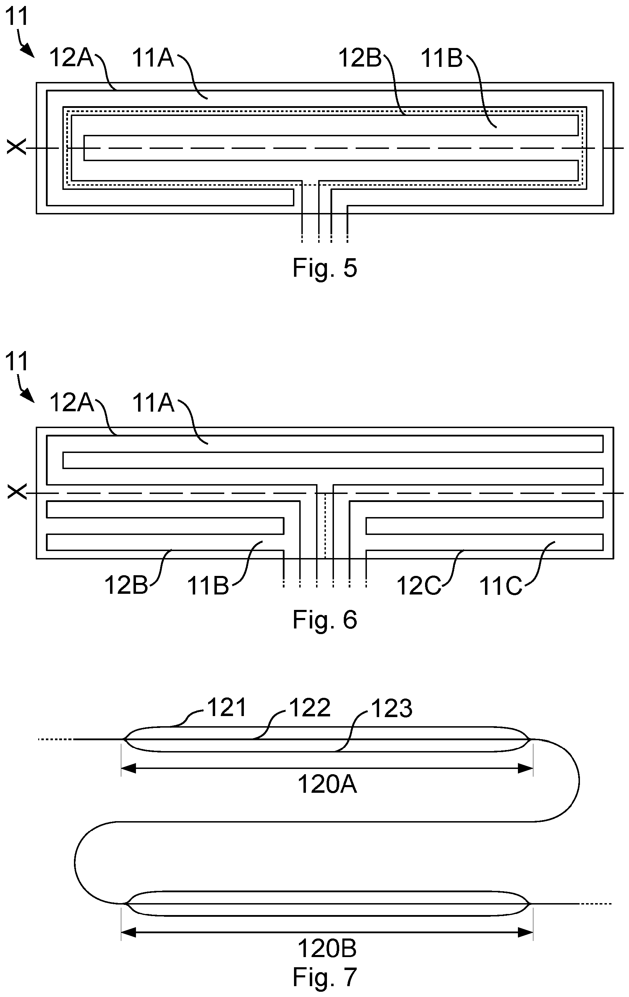

In Figur 5 ist eine weitere Konfiguration der Funktionsschicht 11 mit zwei Zonen 11A, 11B gezeigt, wobei die erste Zone 11A die zweite Zone 11B rahmenförmig umläuft bzw. der erste Funktionsleiter 12A der ersten Zone 11A den zweiten Funktionsleiter 12B der zweiten Zone 11B rahmenförmig umläuft.

Mit Figur 6 ist eine weitere vorteilhafte Variante der Funktionsschicht 11 illustriert, bei welcher drei Zonen 11A, 11B, 11C mit jeweils einem Funktionsleiter 12A, 12B, 12C vorgesehen sind. Dabei ist die erste Zone 11A vorgesehen, eine Rückseite der Lenkhandhabe 1 zu bestimmen. Die zweite und dritte Zone 11B, 11C sind dazu vorgesehen, gemeinsam die Vorderseite der Lenkhandhabe 1 zu bestimmen. Entsprechend ist die erste Zone 11A über die gesamte Erstreckung der Funktionsschicht 11 entlang der Haupterstreckungskurve X, jedoch in Querrichtung zu der Haupterstreckungskurve X nur einseitig zu dieser vorgesehen. Die verbleibende Fläche wird von der zweiten und dritten Zone 11B, 11C belegt, welch entlang der Haupterstreckungskurve X aufeinanderfolgend angeordnet sind. Dadurch kann eine Berührung an der Rückseite der Lenkhandhabe 1 mittels der ersten Zone 11A erkannt und an der Vorderseite zwischen Berührungen auf einer linken und rechten Seite der Lenkhandhabe 1 unterschieden werden, wobei beispielsweise die zweite Zone 11B einer Berührung auf der linken Seite und die dritten Zone 11C einer Berührung auf der rechten Seite der Lenkhandhabe 1 zugeordnet sind.

In Figur 7 ist ein Funktionsleiter abschnittsweise dargestellt, welcher einem der Funktionsleiter 12A, 12B, 12C, 12D entsprechen kann, wie er in einer der in den Figuren 2 bis 6 dargestellten Varianten verwendet sein kann. Der in Figur 7 dargestellte Funktionsleiter ist aus mehreren Einzeldrähten und vorliegend beispielhaft drei Einzeldrähten 121, 122, 123 gebildet, welche in dem dargestellten Ausschnitt in den zwei Abschnitten 120A, 120B aufgefächert bzw. separiert sind, sodass durch einen Funktionsleiter eine breitere Fläche der Funktionsschicht und somit der Ober- bzw. Mantelfläche des Kernelements 10 abdeckbar ist. Zwischen den aufgefächerten Abschnitten 120A, 120B kann der Funktionsleiter wie dargestellt auch gebündelt verlaufen.

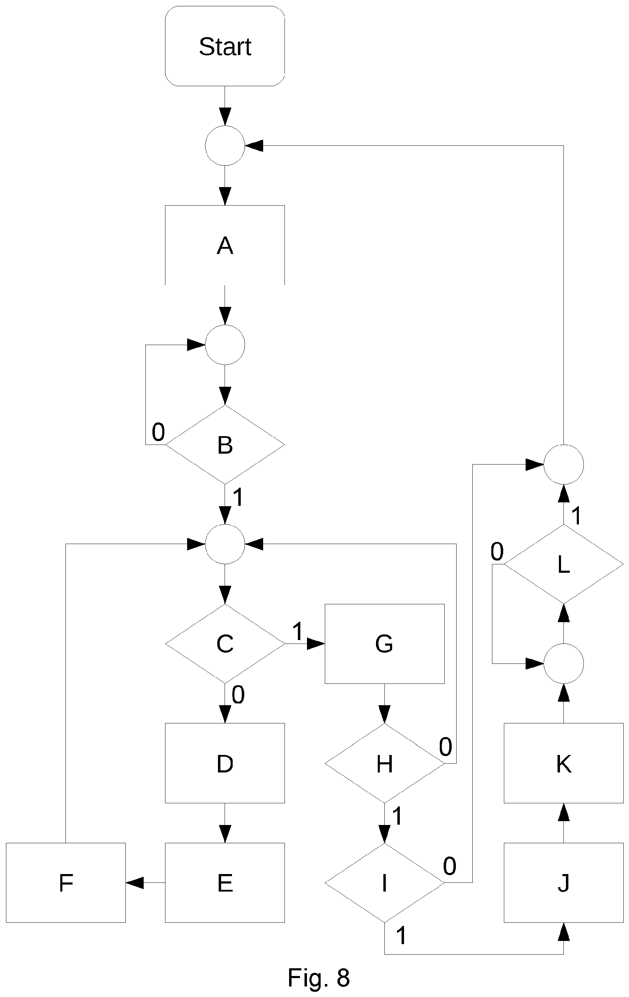

In Figur 8 ist ein an einen Ablaufplan angelehnter Verfahrensablauf dargestellt, wobei an Entscheidungsknoten (Rauten) angeordnete Ziffern 1 mit einem "Ja" und Ziffern 0 mit einem "Nein" gleichzusetzen sind.

Das Verfahren sieht nach dem Start des Verfahrens die folgenden Schritte und Entscheidungen vor:

    A. Beheizung der Lenkhandhabe 1 deaktivieren, Trennen des zumindest einen Funktionsleiters 12A, 12B, 12C, 12D von der Heiz-Steuerschaltung 21 und Verbinden des zumindest einen Funktionsleiters 12A, 12B, 12C, 12D mit der Sensor-Steuerschaltung 22

    B. Soll eine Berührungserkennung an der Lenkhandhabe 1 und insbesondere eine Handerkennung an der Lenkhandhabe 1 durchgeführt werden?

    C. Wurden alle durch jeweils zumindest einen Funktionsleiter 12A, 12B, 12C, 12D und je eine Steuervorrichtung 20 gebildeten Sensoren gemessen bzw. erfasst?

    D. Sensorkonfiguration durchführen

    E. Erkennen einer durch die Sensoren erfassten kapazitiven Änderung

    F. Sensorkonfiguration durchführen

    G. Auswerten der erkannten und erfassten kapazitiven Änderung dahingehend, ob die kapazitive Änderung durch eine Berührung erfolgt ist, vorzugsweise durch einen in der Sensor-Steuerschaltung 22 hinterlegten Berührungserkennungsalgorithmus

    H. War die Auswertung zuverlässig und wurde eine Berührung oder keine Berührung zuverlässig erkannt?

    I. Soll eine Beheizung der Lenkhandhabe 1 durchgeführt werden?

    J. Beheizung der Lenkhandhabe 1 aktivieren, Trennen des zumindest einen Funktionsleiters 12A, 12B, 12C, 12D von der Sensor-Steuerschaltung 22 und Verbinden des zumindest einen Funktionsleiters 12A, 12B, 12C, 12D mit der Heiz-Steuerschaltung 21

    K. Abfrage einer Soll-Temperatur und/oder einer elektrischen Leistung entsprechend einer Heizleistung mit welcher der zumindest eine Funktionsleiter 12A, 12B, 12C, 12D bestromt werden soll

    L. Wurde die Soll-Temperatur und/oder die elektrische Leistung erreicht?

**Patentansprüche**

1. Verfahren zur Steuerung einer Beheizung einer Lenkhandhabe (1) sowie Berührungserkennung an der Lenkhandhabe (1),

    wobei die Lenkhandhabe (1) zumindest einen elektrisch leitfähigen Funktionsleiter (12A, 12B, 12C, 12D) als Heizdraht zur Beheizung der Lenkhandhabe (1), welcher ein Sensorelement eines Sensors zur Berührungserkennung der Lenkhandhabe (1) ist, und eine elektrisch mit zumindest einem Funktionsleiter (12A, 12B, 12C, 12D) verbundene Steuervorrichtung (20) aufweist, die eine Heiz-Steuerschaltung (21) zur Beheizung der Lenkhandhabe (1) über den Funktionsleiter (12A, 12B, 12C, 12D) sowie eine Sensor-Steuerschaltung (22) zur Berührungserkennung der Lenkhandhabe (1) über den Funktionsleiter (12A, 12B, 12C, 12D) aufweist, wobei verfahrensgemäß vorgesehen ist, dass

der zumindest eine Funktionsleiter (12A, 12B, 12C, 12D) elektrisch mit der Heiz-Steuerschaltung (21) verbunden und zugleich oder zuvor von der Sensor-Steuerschaltung (22) getrennt wird,

der zumindest eine mit der Heiz-Steuerschaltung (21) elektrisch verbundene Funktionsleiter (12A, 12B, 12C, 12D) von der Heiz-Steuerschaltung (21) die Lenkhandhabe (1) beheizend angesteuert wird,

der zumindest eine Funktionsleiter (12A, 12B, 12C, 12D) elektrisch mit der Sensor-Steuerschaltung (22) verbunden und zugleich oder zuvor von der Heiz-Steuerschaltung (21) getrennt wird,

der zumindest eine mit der Sensor-Steuerschaltung (22) elektrisch verbundene Funktionsleiter (12A, 12B, 12C, 12D) von der Sensor-Steuerschaltung (22) eine Berührung der Lenkhandhabe (1) erfassend angesteuert wird, **dadurch gekennzeichnet, dass**

bei der eine Berührung der Lenkhandhabe (1) erfassenden Ansteuerung des zumindest einen Funktionsleiters (12A, 12B, 12C, 12D) durch die Sensor-Steuerschaltung (22) eine durch den zumindest einen Funktionsleiter (12A, 12B, 12C, 12D) erfasste Änderung eines kapazitiven Feldes und eine Änderung einer Impedanz zumindest eines Funktionsleiters (12A, 12B, 12C, 12D) von der Sensor-Steuerschaltung (22) erfasst und ausgewertet werden und wobei bei einer Erfassung der Änderung des kapazitiven Feldes und der Änderung der Impedanz zumindest eines Funktionsleiters (12A, 12B, 12C, 12D) plausibilisiert wird, ob es sich dabei um eine Berührung der Lenkhandhabe (1) handelt.

2. Verfahren nach Anspruch 1, wobei nach oder vor dem Verbinden des zumindest einen Funktionsleiters (12A, 12B, 12C, 12D) mit der Sensor-Steuerschaltung (22) abgefragt wird, ob eine Berührungserkennung durch die eine Berührung der Lenkhandhabe (1) erfassende Ansteuerung des zumindest einen Funktionsleiters (12A, 12B, 12C, 12D) durch die Sensor-Steuerschaltung (22) durchzuführen ist.

3. Verfahren nach Anspruch 1 oder 2,

wobei bei der eine Berührung der Lenkhandhabe (1) erfassenden Ansteuerung des zumindest einen Funktionsleiters (12A, 12B, 12C, 12D) durch die Sensor-Steuerschaltung (22) eine Konfiguration des zumindest einen Funktionsleiters (12A, 12B, 12C, 12D) und der Sensor-Steuerschaltung (22) als Ist-Wert erfasst und mit einem Soll-Wert verglichen wird.

4. Verfahren nach einem der vorhergehenden Ansprüche,

wobei bei dem Verbinden des zumindest einen Funktionsleiters (12A, 12B, 12C, 12D) mit der Sensor-Steuerschaltung (22) mehrere Funktionsleiter (12A, 12B, 12C, 12D) mit der Sensor-Steuerschaltung (22) verbunden werden, sodass die Funktionsleiter (12A, 12B, 12C, 12D) mit der Sensor-Steuerschaltung (22) mehrere Sensoren bilden, und/oder mehrere Sensor-Steuerschaltungen (22) vorgesehen sind und bei dem Verbinden des zumindest einen Funktionsleiters (12A, 12B, 12C, 12D) mit der Sensor-Steuerschaltung (22) ein Funktionsleiter (12A, 12B, 12C, 12D) oder mehrere Funktionsleiter (12A, 12B, 12C, 12D) mit jeder Sensor-Steuerschaltung (22) verbunden werden, sodass die Funktionsleiter (12A, 12B, 12C, 12D) mit den Sensor-Steuerschaltungen (22) mehrere Sensoren bilden.

5. Verfahren nach dem vorhergehenden Anspruch, wobei bei einer eine Berührung der Lenkhandhabe (1) erfassenden Ansteuerung des zumindest einen Funktionsleiters (12A, 12B, 12C, 12D) jeder Sensor abgefragt wird, ob eine Berührung der Lenkhandhabe (1) erfasst wurde.

6. Verfahren nach einem der vorhergehenden Ansprüche, wobei nach oder vor dem Verbinden des zumindest einen Funktionsleiters (12A, 12B, 12C, 12D) mit der Heiz-Steuerschaltung (21) von der Sensor-Steuerschaltung (22) abgefragt wird, ob eine die Lenkhandhabe (1) beheizende Ansteuerung des zumindest einen Funktionsleiters (12A, 12B, 12C, 12D) durch die Heiz-Steuerschaltung (21) durchzuführen ist.

7. Verfahren nach einem der vorhergehenden Ansprüche,

wobei bei einer die Lenkhandhabe (1) beheizenden Ansteuerung des zumindest einen Funktionsleiters (12A, 12B, 12C, 12D) durch die Heiz-Steuerschaltung (22) ein Soll-Wert für die Temperatur der Lenkhandhabe abgefragt wird,

und/oder ein Ist-Wert der Temperatur der Lenkhandhabe erfasst und mit dem Soll-Wert verglichen wird.

**Claims**

1. A method for controlling a heating of a steering handle (1) and touch detection at the steering handle (1),

   the steering handle (1) having at least one electrically conductive functional conductor (12A, 12B, 12C, 12D) as heating wire for heating the steering handle (1), which is a sensor element of a sensor for touch detection of the steering handle (1), and a control device (20) being electrically connected to at least one functional conductor (12A, 12B, 12C, 12D), which has a heating control circuit (21) for heating the steering handle (1) via the functional conductor (12A, 12B, 12C, 12D) and a sensor control circuit (22) for touch detection at the steering handle (1) via the functional conductor (12A, 12B, 12C, 12D), wherein, according to the method, it is provided that the at least one functional conductor (12A, 12B, 12C, 12D) is electrically connected to the heating control circuit (21) and is simultaneously or beforehand disconnected from the sensor control circuit (22), the at least one functional conductor (12A, 12B, 12C, 12D), electrically connected to the heating control circuit (21), is addressed by the heating control circuit (21) in a manner heating the steering handle (1), the at least one functional conductor (12A, 12B, 12C, 12D) is electrically connected to the sensor control circuit (22) and is simultaneously or beforehand disconnected from the heating control circuit (21), the at least one functional conductor (12A, 12B, 12C, 12D), electrically connected to the sensor control circuit (22), is addressed by the sensor control circuit (22) in a manner detecting a touch of the steering handle (1), **characterised in that**, upon the addressing of the at least one functional conductor (12A, 12B, 12C, 12D) by the sensor control circuit (22) in a manner detecting a touch of the steering handle (1), a change of a capacitive field detected by the at least one functional conductor (12A, 12B, 12C, 12D) and a change of an impedance of at least one functional conductor (12A, 12B, 12C, 12D) are detected and evaluated by the sensor control circuit (22)

   and wherein, upon detection of the change of the capacitive field and the change of the impedance of at least one functional conductor (12A, 12B, 12C, 12D), it is plausibilised whether this is a touch of the steering handle (1).

2. The method according to claim 1, wherein, after or before the connecting of the at least one functional conductor (12A, 12B, 12C, 12D) to the sensor control circuit (22), it is queried whether a touch detection through the addressing of the at least one functional conductor (12A, 12B, 12C, 12D) by the sensor control circuit (22) in a manner detecting a touch of the steering handle (1) is to be performed.

3. The method according to claim 1 or 2,

   wherein, upon the addressing of the at least one functional conductor (12A, 12B, 12C, 12D) by the sensor control circuit (22) in a manner detecting a touch of the steering handle (1), a configuration of the at least one functional conductor (12A, 12B, 12C, 12D) and the sensor control circuit (22) is detected as an actual value and is compared to a target value.

4. The method according to any one of the preceding claims,

   wherein, upon the connecting of the at least one functional conductor (12A, 12B, 12C, 12D) to the sensor control circuit (22), multiple functional conductors (12A, 12B, 12C, 12D) are connected to the sensor control circuit (22), so that the functional conductors (12A, 12B, 12C, 12D) form multiple sensors with the sensor control circuit (22), and/or multiple sensor control circuits (22) are provided and, upon the connecting of the at least one functional conductor (12A, 12B, 12C, 12D) to the sensor control circuit (22), one functional conductor (12A, 12B, 12C, 12D) or multiple functional conductors (12A, 12B, 12C, 12D) are connected to each sensor control circuit (22), so that the functional conductors (12A, 12B, 12C, 12D) form multiple sensors with the sensor control circuits (22).

5. The method according to the preceding claim, wherein, upon an addressing of the at least one functional conductor (12A, 12B, 12C, 12D) in a manner detecting a touch of the steering handle (1), each sensor is queried whether a touch of the steering handle (1) was detected.

6. The method according to any one of the preceding claims, wherein, after or before the connecting of the at least one functional conductor (12A, 12B, 12C, 12D) to the heating control circuit (21), it is queried by the sensor control circuit (22) whether an addressing of the at least one functional conductor (12A, 12B, 12C, 12D) by the heating control circuit (21) in a manner heating the steering handle (1) is to be performed.

7. The method according to any one of the preceding claims,

wherein, upon an addressing of the at least one functional conductor (12A, 12B, 12C, 12D) by the heating control circuit (22) in a manner heating the steering handle (1), a target value for the temperature of the steering handle is queried, and/or an actual value of the temperature of the steering handle is detected and compared to the target value.

**Revendications**

1. Procédé de commande d'un dispositif de chauffage d'une poignée de direction (1) et de détection tactile sur la poignée de direction (1), **caractérisé en ce que**

dans lequel la poignée de direction (1) présente au moins un conducteur fonctionnel (12A, 12B, 12C, 12D) électriquement conducteur en tant que fil chauffant pour le chauffage de la poignée de direction (1), lequel est un élément capteur d'un capteur pour la détection tactile de la poignée de direction (1), et un dispositif de commande (20) relié électriquement à au moins un conducteur fonctionnel (12A, 12B, 12C, 12D), lequel présente un circuit de commande de chauffage (21) pour le chauffage de la poignée de direction (1) par l'intermédiaire du conducteur fonctionnel (12A, 12B, 12C, 12D) ainsi qu'un circuit de commande de capteur (22) pour la détection tactile de la poignée de direction (1) par l'intermédiaire du conducteur fonctionnel (12A, 12B, 12C, 12D), dans lequel il est prévu, conformément au procédé, que l'au moins un conducteur fonctionnel (12A, 12B, 12C, 12D) est relié électriquement au circuit de commande de chauffage (21) et, simultanément ou préalablement, est déconnecté du circuit de commande de capteur (22), l'au moins un conducteur fonctionnel (12A, 12B, 12C, 12D) relié électriquement au circuit de commande de chauffage (21) est commandé par le circuit de commande de chauffage (21) de manière à chauffer la poignée de direction (1), l'au moins un conducteur fonctionnel (12A, 12B, 12C, 12D) est relié électriquement au circuit de commande de capteur (22) et, simultanément ou préalablement, est déconnecté du circuit de commande de chauffage (21), l'au moins un conducteur fonctionnel (12A, 12B, 12C, 12D) relié électriquement au circuit de commande de capteur (22) est commandé par le circuit de commande de capteur (22) de manière à détecter un contact sur la poignée de direction (1), **caractérisé en ce que** lors de la commande de l'au moins un conducteur fonctionnel (12A, 12B, 12C, 12D) par le circuit de commande de capteur (22) pour détecter un contact sur la poignée de direction (1), une modification d'un champ capacitif détectée par l'au moins un conducteur fonctionnel (12A, 12B, 12C, 12D) et une modification d'une impédance d'au moins un conducteur fonctionnel (12A, 12B, 12C, 12D) sont détectées et évaluées par le circuit de commande de capteur (22) et dans lequel, lors d'une détection de la modification du champ capacitif et de la modification de l'impédance d'au moins un conducteur fonctionnel (12A, 12B, 12C, 12D), il est procédé à un contrôle de plausibilité pour déterminer s'il s'agit d'un contact sur la poignée de direction (1).

2. Procédé selon la revendication 1, dans lequel, après ou avant la liaison de l'au moins un conducteur fonctionnel (12A, 12B, 12C, 12D) au circuit de commande de capteur (22), il est demandé si une détection tactile doit être effectuée par la commande de l'au moins un conducteur fonctionnel (12A, 12B, 12C, 12D) par le circuit de commande de capteur (22) pour détecter un contact sur la poignée de direction (1).

3. Procédé selon la revendication 1 ou 2,

dans lequel, lors de la commande de l'au moins un conducteur fonctionnel (12A, 12B, 12C, 12D) par le circuit de commande de capteur (22) pour détecter un contact sur la poignée de direction (1), une configuration de l'au moins un conducteur fonctionnel (12A, 12B, 12C, 12D) et du circuit de commande de capteur (22) est détectée en tant que valeur réelle et est comparée à une valeur de consigne.

4. Procédé selon l'une des revendications précédentes,

dans lequel, lors de la liaison de l'au moins un conducteur fonctionnel (12A, 12B, 12C, 12D) au circuit de commande de capteur (22), plusieurs conducteurs fonctionnels (12A, 12B, 12C, 12D) sont reliés au circuit de commande de capteur (22), de sorte que les conducteurs fonctionnels (12A, 12B, 12C, 12D) forment, conjointement avec le circuit de commande de capteur (22), plusieurs capteurs,
et/ou plusieurs circuits de commande de capteur (22) sont prévus et, lors de la liaison de l'au moins un conducteur fonctionnel (12A, 12B, 12C, 12D) au circuit de commande de capteur (22), un conducteur fonctionnel (12A, 12B, 12C, 12D) ou plusieurs conducteurs fonctionnels (12A, 12B, 12C, 12D) sont reliés à chaque circuit de commande de capteur (22), de sorte que les conducteurs fonctionnels (12A, 12B, 12C, 12D) forment, conjointement avec les circuits de commande de capteur (22), plusieurs capteurs.

5. Procédé selon la revendication précédente, dans lequel, lors d'une commande de l'au moins un conducteur fonctionnel (12A, 12B, 12C, 12D) pour détecter un contact sur la poignée de direction (1), chaque capteur est interrogé pour déterminer si un contact sur la poignée de direction (1) a été détecté.

6. Procédé selon l'une des revendications précédentes, dans lequel, après ou avant la liaison de l'au moins un conducteur fonctionnel (12A, 12B, 12C, 12D) au circuit de commande de chauffage (21), il est demandé par le circuit de commande de capteur (22) si une commande de l'au moins un conducteur fonctionnel (12A, 12B, 12C, 12D) par le circuit de commande de chauffage (21) pour chauffer la poignée de direction (1) doit être effectuée.

7. Procédé selon l'une des revendications précédentes, dans lequel, lors d'une commande de l'au moins un conducteur fonctionnel (12A, 12B, 12C, 12D) par le circuit de commande de chauffage (21) pour chauffer la poignée de direction (1), une valeur de consigne pour la température de la poignée de direction est demandée, et/ou une valeur réelle de la température de la poignée de direction est détectée et est comparée à la valeur de consigne.

1

U

$d_K$

R

X

11

14

$d_L$

10

13

Fig. 1

11

12A    11A    $I_L$

$I_K$

23

12B    11B    X    15

20

21    22

Fig. 2

11

12A  11A  12B  11B

X

Fig. 3

11

12A  11A  12B  11B

X

12C  11C  12D  11D

Fig. 4

11

12A    11A              12B      11B

X

Fig. 5

11

12A    11A

X

12B    11B              12C    11C

Fig. 6

121    122    123

120A

120B

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2028078 A1
- DE 112018005213 T5
- DE 102019124293 A1
- WO 2018213344 A1
- DE 102018222551 A1